# EUROPEAN PATENT SPECIFICATION

(11) **EP 3 444 296 B1**
(45) Date of publication and mention of the grant of the patent: **17.02.2021**
(21) Application number: 16900042.9
(22) Date of filing: 14.07.2016
(51) Int. Cl.: C08J 7/12, C08J 7/18, C08L 23/12, C08L 23/06, C08L 23/08, B05D 1/00, C08F 2/34, C08F 255/02, C08F 8/30, B05D 3/14

(54) **DIRECTLY COATED POLYOLEFIN FILM AND PREPARATION METHOD THEREFOR**
DIREKT BESCHICHTETE POLYOLEFINFOLIE UND HERSTELLUNGSVERFAHREN DAFÜR
FILM DE POLYOLÉFINE DIRECTEMENT ENDUIT ET SON PROCÉDÉ DE PRÉPARATION

(30) Priority: 25.04.2016 CN 201610262624
(43) Date of publication of application: 20.02.2019
(73) Proprietor: GUANGDONG ZHONGKE HUATONG NEW MATERIALS TECHNOLOGY CO., LTD., Licun, Xiegang Town Dongguan Guangdong 523600 (CN)
(72) Inventor: WANG, Feng, Beijing 100190 (CN); YANG, Mingshu, Beijing 100190 (CN); DONG, Xia, Beijing 100190 (CN); WANG, Dujin, Beijing 100190 (CN); ZHANG, Jianwei, Beijing 100190 (CN); ZHAO, Ying, Beijing 100190 (CN); ZHOU, Yong, Beijing 100190 (CN); ZHANG, Deqing, Beijing 100190 (CN)
(74) Representative: Hanna Moore + Curley
(86) International application number: PCT/CN2016/090006
(87) International publication number: WO 2017/185532

(56) References cited:
- EP-A2- 0 679 680
- WO-A2-01/58971
- CN-A- 102 432 905
- CN-A- 102 432 905
- CN-A- 104 356 420
- CN-A- 104 371 135
- CN-B- 101 831 079
- CN-B- 104 001 224
- JP-A- S6 189 236
- US-A- 5 152 879
- KO, T.M ET AL.: 'Surface Properties and Platelet Adhesion Characteristics of Acrylic Acid and Allylamine Plasma-Treated Polyethylene' JOURNAL OF APPLIED POLYMER SCIENCE vol. 47, 31 December 1993, ISSN 1097-4628 XP000449857
- WANG, YUERAN ET AL.: 'Low Temperature Gas Plasma-induced Graft Polymerization of Acrylic Acid onto Polypropylene Film' JOURNAL OF TEXTILE RESEARCH vol. 32, no. 05, 31 May 2011, pages 10 - 15, XP009509485

## Description

### TECHNICAL FIELD

The present disclosure relates to a method for modifying a polyolefin film, more particularly, relates to a method for the preparation of a film through initiating gas-phase graft polymerization between polar molecules and the surface of the polyolefin film by using low-temperature plasma.

### BACKGROUND

The polyolefin film is one of the most extensive-applied packaging plastics. The polyolefin film is good in property, light in weight, low in cost, and good in air tightness and smooth in surface. And the polyolefin films have toughness and fold resistance can protect goods and can keep shapes and colors of the goods.

However, polyolefin films belong to nonpolar macromolecular materials and have relatively poor affinity to ink. And low-molecular substances such as a plasticizer, an initiator, residual monomers and degraded matters added during forming process will be separated out and collected to surfaces of materials to form amorphous layers, so that wetting properties of surfaces of the films are lowered.

A method for preparing an olefin monomer-polyolefin graft copolymer through plasma is disclosed by an invention patent with an application number of 201310135952.X. The gas is ionized into the plasma by adopting a dielectric barrier discharge method. Meanwhile, the surface of a polymer is treated by using the plasma to produce active free radicals such as peroxy. Then, the polymer is transferred to a flask containing graft monomers, and a graft reaction is performed under the protection of nitrogen gas. According to the method, the surface of the polymer is treated with the low-tcmpcraturc plasma. However, flows are complicated, impurities may be introduced to the surface in a process of transferring the polymer into a graft vessel, and thus, the effect of graft polymerization is affected.

A method for initiating gas-phase graft modification of the surface of a polyethylene film by low-temperature plasma is disclosed by an invention patent with an application number of 201110233950.5. A corona treatment is performed on the surface of the film by adopting a low-temperature plasma machine. Then, graft monomers are introduced, and a graft reaction is completed under the irradiation of ultraviolet rays generated by a high-pressure mercury lamp. According to the method, the graft reaction of a polymer is guided and completed by using the low-temperature plasma. However, the startup time of the high-pressure mercury lamp is relatively long, and the high-pressure mercury lamp can only be started up again after a lamp body is cooled after use, so that the method is not applicable to continuous production.

A nano-modified polypropylene soft packaging material is disclosed by an invention patent with an application number of 200910176114.0. A processing aid mixture adopted by polypropylene is a mixture of nano silica - vinyl acetate copolymer and accounts for 10-40% of gross mass. And the nano silica accounts for 60-90% of the mass of the processing aid mixture. In comparative examples and embodiments of the present invention, a water contact angle of polypropylene modified with a nanometer material is reduced to 95.3° from 103.2°, and the effect is not very obvious.

In order to obtain a polyolefin film with higher surface energy by using a method with quick and simple flows, the present disclosure is provided.

### SUMMARY

The object of the present disclosure is to provide a polyolefin film with capability of being directly coated with higher surface energy and further provide a method for producing the polyolefin film with quick flows and simple processes.

In order to achieve the object of the present disclosure, the present disclosure adopts a technical scheme as follows:
The present disclosure provides a method for modifying a polyolefin film.
The method comprises following steps:
(1) Cleaning a surface of a polyolefin film to be treated with acetone, and drying the polyolefin film in the air for later use;
(2) Placing the polyolefin film in step (1) in a low-temperature plasma reaction chamber, and vacuuming the low-temperature plasma reaction chamber to 10-30Pa;
(3) After step (2) ends up, introducing polar molecules into the reaction chamber, adjusting temperature and pressure, and starting to carry out low-temperature plasma gas-phase graft treatment on the surface of polyolefin, to obtain a modified polyolefin film.

In the prior art, gas such as oxygen and argon is commonly used as plasma working gas to activate the surface of a material. Then, gas-phase graft is carried out by using substances such as acrylic maleic anhydride and a silanization reagent. Thus, process flows are relatively long, and procedures are relatively complicated. In a process of carrying out a plasma gas-phase graft test, researchers of the present disclosure surprisingly discovered that by using gaseous polar molecules as the working gas, the action of activating the surface can be performed. Meanwhile, a graft layer can be formed on the surface of polyolefin, so that the surface properties of the polyolefin can be greatly improved.

In the above-mentioned method, main ingredients of the polyolefin film comprise low-density polyethylene, high-density polyethylene, linear low-density polyethylene or polypropylene.

In the above-mentioned method, the low-temperature plasma treatment in step (3) comprises a radio-frequency low-temperature plasma discharge process, and treatment power of a power supply selected is 100-600W, preferably 200-600W, and more preferably 300-400W. The higher the power of plasma is, and the higher the surface energy of a treated film is. However, the stability will be lowered due to too high activity of the graft layer. Thus, surface properties of the film will be better improved by selecting appropriate power.

The gas-phase graft reaction in step (3) is carried out for 2-10min at a temperature of 0-75 ° C under the pressure of 15-50Pa, preferably for 2-5min at a temperature of 20-50° C under the pressure of 35-50Pa. The lower the reaction temperature is, the longer the reaction time is, the lower the reaction pressure is, and the higher the surface energy of a polyolefin film is. However, the stability of a graft layer will be affected. Thus, the selection of the temperature, time and pressure of reaction is also an important influencing factor.

A vacuum degree in step (2) is 10-30Pa, preferably 15-30Pa, and more preferably 15-20Pa.

The gaseous polar molecules in step (3) are preferably one or more than one selected from a group consisting of chlorine gas, hydrogen sulfide, ammonia gas, hydrogen chloride, acrylic acid, 3-aminopropyltriethoxysilane, 3-aminopropyltrimethoxysilane, 3-aminopropyldiethoxysilane, cyclohexylaminopropyltrimethoxysilane, 3-ureidopropyltrimethoxysilane, 3-mercaptopropyltriethoxysilane, 3-mercaptopropyltripropoxysilane, 3-chloropropyltrimethoxysilane, 3-chloropropyltriethoxysilane, 3-chloropropylmethyldimethoxysilane and 3-chloropropylmethyldiethoxysilane. By adopting micromolecular polar gas, the graft layer can be more quickly formed on the surface of the film, and the surface energy can be extremely improved. By adopting the vaporable polar molecules, the storage of graft polar feedstock is better facilitated while the capability of improving the surface energy of the film is guaranteed.

The present disclosure further provides the polyolefin film with capability of being directly coated prepared by the method. A graft layer of a surface of the polyolefin film has the thickness of 5-80nm.

According to the present disclosure, polar elements contained in the graft layer of the surface of the polyolefin film comprise one or more than one selected from a group consisting of nitrogen element, oxygen element, chlorine element, silicon element and sulfur element, and the polar elements contained in the graft layer account for 20-35wt % of total elements of the graft layer.

According to the present disclosure, the polyolefin film has a critical surface tension of 45-55dyne/cm and a water contact angle of 30-60°.

Polyolefin belongs to a nonpolar macromolecular material, so that the effect of ink printing on the surface of a polyolefin film is relatively poor. The polyolefin film is extensively applied to daily lives. Plastic bags, which are commonly used by us, are the commonest examples, fundamental composition substances of the polyolefin film comprise polyethylene and polypropylene, and the surface of the polyolefin film are mainly formed by the connection of C-C bond. So that the polyolefin film has relatively poor polarity to water, the polarity of the surface of polyolefin is relatively low, ink attachment is not easy, and a printing process is affected.

According to the present disclosure, aiming at a technical difficulty that the surface energy of polyolefin materials is low, a plasma treatment process serves as a starting point, and molecules with relatively high polarity are selected and are bonded to the surface of polyolefin in a gas-phase graft manner to improve the printability and bonding fastness of the film.

Compared with the prior art, the method for preparing the polyolefin film through initiating a gas-phase graft reaction by low-temperature plasma, provided by the present disclosure, has the advantages that the step of enriching active free radicals to surfaces of materials by using non-polymerized gas in common plasma treatment is simplified, and gaseous molecules with relatively high polarity are subjected to plasma forming and form graft layers on the surfaces of the materials. The process is simple and is convenient in operation, specific polar molecules can be selected according to surface coating composition, and the polarity of modified material surfaces can be effectively maintained.

### DETAILED DESCRIPTION OF PREFERRED EMBODIMENTS

Specific embodiments of the present disclosure are only limited to further describe and declare the present disclosure, but not to confine contents of the present disclosure.

### Embodiment 1

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 15Pa;
(3) after step (2) ends up, adjusting radio-frequency low-temperature plasma parameters, adjusting treatment power to 400W, meanwhile, introducing ammonia gas, and adjusting the temperature of the reaction chamber to 30° C, the pressure of the reaction chamber to 35Pa and the reaction time of the reaction chamber to 2min.

### Embodiment 2

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 15pa;
(3) after step (2) ends up, adjusting radio-frequency low-temperature plasma parameters, adjusting treatment power to 400w, meanwhile, introducing vaporized acrylic acid molecules, and adjusting the temperature of the reaction chamber to 60° c, the pressure of the reaction chamber to 35pa and the reaction time of the reaction chamber to 2min.

### Embodiment 3

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 10pa;
(3) after the step (2) ends up, adjusting radio-frequency low-temperature plasma parameters, adjusting treatment power to 400w, meanwhile, introducing chlorine gas, and adjusting the temperature of the reaction chamber to 20° c, the pressure of the reaction chamber to 35pa and the reaction time of the reaction chamber to 5min.

### Embodiment 4

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 30pa;
(3) after step (2) ends up, adjusting radio-frequency low-temperature plasma parameters, adjusting treatment power to 400w, meanwhile, introducing vaporized 3-aminopropyltriethoxysilane, and adjusting the temperature of the reaction chamber to 50° c, the pressure of the reaction chamber to 35pa and the reaction time of the reaction chamber to 5min.

### Embodiment 5

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 20pa;
(3) after step (2) ends up, adjusting radio-frequency low-temperature plasma parameters, adjusting treatment power to 300w, meanwhile, introducing vaporized 3-chloropropyltriethoxysilane, and adjusting the temperature of the reaction chamber to 50° c, the pressure of the reaction chamber to 50pa and the reaction time of the reaction chamber to 5min.

### Embodiment 6

The surface of a low-density polyethylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 15pa;
(3) after step (2) ends up, adjusting radio-frequency low-temperature plasma parameters, adjusting treatment power to 400w, meanwhile, introducing ammonia gas, and adjusting the temperature of the reaction chamber to 30° c, the pressure of the reaction chamber to 35pa and the reaction time of the reaction chamber to 2min.

### Embodiment 7

The surface of a low-density polyethylene film was treated according to the following steps:
(1) cleaning a low-density polyethylene film to be treated with acetone, and drying the cleaned low-density polyethylene film in the air;
(2) placing the low-density polyethylene film in step (1) into a radio-frequency low-temperature plasma reaction chamber, and vacuuming the radio-frequency low-temperature plasma reaction chamber to 10pa;
(3) after step (2) ends up, adjusting radio-frequency low-temperature plasma parameters, adjusting treatment power to 600w, meanwhile, introducing hydrogen sulfide, and adjusting the temperature of the reaction chamber to 30° c, the pressure of the reaction chamber to 35pa and the reaction time of the reaction chamber to 2min.

### Embodiment 8

The surface of a high-density polyethylene film was treated according to the following steps:
(1) cleaning a high-density polyethylene film to be treated with acetone, and drying the cleaned high-density polyethylene film in the air;
(2) placing the high-density polyethylene film in step (1) into a radio-frequency low-temperature plasma reaction chamber, and vacuuming the radio-frequency low-temperature plasma reaction chamber to 15pa;
(3) after step (2) ends up, adjusting radio-frequency low-temperature plasma parameters, adjusting treatment power to 400w, meanwhile, introducing vaporized hydrogen chloride, and adjusting the temperature of the reaction chamber to 20° c, the pressure of the reaction chamber to 35pa and the reaction time of the reaction chamber to 5min.

### Embodiment 9

The surface of a high-density polyethylene film was treated according to the following steps:
(1) cleaning a high-density polyethylene film to be treated with acetone, and drying the cleaned high-density polyethylene film in the air;
(2) placing the high-density polyethylene film in step (1) into a radio-frequency low-temperature plasma reaction chamber, and vacuuming the radio-frequency low-temperature plasma reaction chamber to 30pa;
(3) after step (2) ends up, adjusting radio-frequency low-temperature plasma parameters, adjusting treatment power to 400w, meanwhile, introducing vaporized 3-aminopropyltrimethoxysilane, and adjusting the temperature of the reaction chamber to 0° c, the pressure of the reaction chamber to 35pa and the reaction time of the reaction chamber to 5min.

### Embodiment 10

The surface of a linear low-density polyethylene film was treated according to the following steps:
(1) cleaning a linear low-density polyethylene film to be treated with acetone, and drying the cleaned linear low-density polyethylene film in the air;
(2) placing the linear low-density polyethylene film in step (1) into a radio-frequency low-temperature plasma reaction chamber, and vacuuming the radio-frequency low-temperature plasma reaction chamber to 10pa;
(3) after step (2) ends up, adjusting radio-frequency low-temperature plasma parameters, adjusting treatment power to 200w, meanwhile, introducing vaporized 3-aminopropyldiethoxysilane, and adjusting the temperature of the reaction chamber to 70° c, the pressure of the reaction chamber to 15pa and the reaction time of the reaction chamber to 5min.

### Embodiment 11

The surface of a linear low-density polyethylene film was treated according to the following steps:
(1) cleaning a linear low-density polyethylene film to be treated with acetone, and drying the cleaned linear low-density polyethylene film in the air;
(2) placing the linear low-density polyethylene film in step (1) into a radio-frequency low-temperature plasma reaction chamber, and vacuuming the radio-frequency low-temperature plasma reaction chamber to 10pa;
(3) after step (2) ends up, adjusting radio-frequency low-temperature plasma parameters, adjusting treatment power to 200w, meanwhile, introducing vaporized cyclohexylaminopropyltrimethoxysilane, and adjusting the temperature of the reaction chamber to 20° c, the pressure of the reaction chamber to 15pa and the reaction time of the reaction chamber to 5min.

### Embodiment 12

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 10Pa;
(3) after step (2) ends up, adjusting radio-frequency low-temperature plasma parameters, adjusting treatment power to 100W, meanwhile, introducing vaporized 3-ureidopropyltrimethoxysilane, and adjusting the temperature of the reaction chamber to 30° C, the pressure of the reaction chamber to 15Pa and the reaction time of the reaction chamber to 2min.

### Embodiment 13

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 10Pa;
(3) after step (2) ends up, adjusting radio-frequency low-temperature plasma parameters, adjusting treatment power to 400W, meanwhile, introducing ammonia gas and vaporized 3-mercaptopropyltriethoxysilane, and adjusting the temperature of the reaction chamber to 30° C, the pressure of the reaction chamber to 15Pa and the reaction time of the reaction chamber to 2min.

### Embodiment 14

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 15Pa;
(3) after step (2) ends up, adjusting radio-frequency low-temperature plasma parameters, adjusting treatment power to 400W, meanwhile, introducing ammonia gas and vaporized 3-mercaptopropyltripropoxysilane, and adjusting the temperature of the reaction chamber to 30° C, the pressure of the reaction chamber to 35Pa and the reaction time of the reaction chamber to 2min.

### Embodiment 15

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 15Pa;
(3) after step (2) ends up, adjusting radio-frequency low-temperature plasma parameters, adjusting treatment power to 400W, meanwhile, introducing ammonia gas and vaporized 3-chloropropyltrimethoxysilane, and adjusting the temperature of the reaction chamber to 30° C, the pressure of the reaction chamber to 50Pa and the reaction time of the reaction chamber to 2min.

### Embodiment 16

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 15Pa;
(3) after step (2) ends up, adjusting radio-frequency low-temperature plasma parameters, adjusting treatment power to 400W, meanwhile, introducing vaporized 3-chloropropyltriethoxysilane, and adjusting the temperature of the reaction chamber to 20° C, the pressure of the reaction chamber to 35Pa and the reaction time of the reaction chamber to 10min.

### Embodiment 17

The surface of a polypropylene film was treated according to the following steps:
(1) cleaning a polypropylene film to be treated with acetone, and drying the cleaned polypropylene film in the air;
(2) placing the polypropylene film in step (1) into a radio-frequency low-temperature plasma reaction chamber, and vacuuming the radio-frequency low-temperature plasma reaction chamber to 15Pa;
(3) after step (2) ends up, adjusting radio-frequency low-temperature plasma parameters, adjusting treatment power to 400W, meanwhile, introducing vaporized 3-chloropropylmethyldimethoxysilane, and adjusting the temperature of the reaction chamber to 20° C, the pressure of the reaction chamber to 35Pa and the reaction time of the reaction chamber to 2min.

### Embodiment 18

The surface of a polypropylene film was treated according to the following steps:
(1) cleaning a polypropylene film to be treated with acetone, and drying the cleaned polypropylene film in the air;
(2) placing the polypropylene film in step (1) in a radio-frequency low-temperature plasma reaction chamber, and vacuuming the radio-frequency low-temperature plasma reaction chamber to 15Pa;
(3) after step (2) ends up, adjusting radio-frequency low-temperature plasma parameters, adjusting treatment power to 400W, meanwhile, introducing vaporized 3-chloropropylmethyldiethoxysilane, and adjusting the temperature of the reaction chamber to 20° C, the pressure of the reaction chamber to 35Pa and the reaction time of the reaction chamber to 5min.

### Comparative Example 1

A polypropylene film was treated according to the steps in the embodiment 1, and the difference was that gas introduced in step (3) was a gas mixture of oxygen and argon.

### Comparative Example 2

A low-density polyethylene film was treated according to the steps in the embodiment 6, and the difference was that gas introduced in step (3) was a gas mixture of oxygen and argon.

### Comparative Example 3

A polypropylene film was treated according to the steps in the embodiment 1, and the difference was that oxygen and argon were introduced in step (3) as plasma working gas, and then, acrylic maleic anhydride was introduced for gas-phase grafting.

### Test Example 1 Test on critical surface tension and water contact angle

Untreated polypropylene and polyethylene films, films treated according to the embodiments 1-18 and films treated according to the comparative examples 1-3 are selected. Critical surface tension and water contact angles are tested, and the contact angles are measured again 11 days later to determine stability of graft layers. And obtained results are as shown in a table 1.

Contact angle testing flows are shown as follows:
(1) Checking whether or not a computer and a host are connected, and adjusting the host to be level, i.e., a bubble of a level bubble is located at a central position.
(2) Putting through a power supply, adjusting the brightness of a light source, and starting to test.
(3) Taking a screen rectangular area of computer software as an image display area, and the display area displaying image contents picked up by a current pickup camera.
(4) Prior to sampling, firstly, leveling an image pickup system: moving a rising and falling platform up and down to enable an upper edge of a sample platform to be displayed at the bottom of a window.
(5) Going to a test stage after the leveling is completed. During testing, enabling a liquid droplet to be in an optimal display status through the up-and-down and right-and-left movement of the sample platform.
(6) Then, going to a measurement stage, photographing images, going to a measurement interface. And then, carrying out measurement and calculation by using an ellipse method to obtain results.

**Table 1 Water contact angles and critical surface tension of surfaces of polyolefin films**

| | Critical surface tension (dyne/cm) | Contact angle (°) | 11-day-later contact angle (°) |
|---|---|---|---|
| Untreated PP film | 30 | 101.9 | 101.9 |
| Untreated PE film | 31 | 95.7 | 95.7 |
| Comparative example 1 | 39 | 68.4 | 75.2 |
| Comparative example 2 | 40 | 73.6 | 79.3 |
| Comparative example 3 | 42 | 62.5 | 68.4 |
| Embodiment 1 | 50 | 45.2 | 45.3 |
| Embodiment 2 | 47 | 49.1 | 53.6 |
| Embodiment 3 | 52 | 38.6 | 42.9 |
| Embodiment 4 | 48 | 47.3 | 51.7 |
| Embodiment 5 | 46 | 53.2 | 56.8 |
| Embodiment 6 | 50 | 45.8 | 47.9 |
| Embodiment 7 | 51 | 44.8 | 48.2 |
| Embodiment 8 | 51 | 43.1 | 46.7 |
| Embodiment 9 | 55 | 34.1 | 49.5 |
| Embodiment 10 | 45 | 55.2 | 59.8 |
| Embodiment 11 | 49 | 47.1 | 50.9 |
| Embodiment 12 | 46 | 53.4 | 57.1 |
| Embodiment 13 | 51 | 43.6 | 43.9 |
| Embodiment 14 | 48 | 48.0 | 51.1 |
| Embodiment 15 | 47 | 49.2 | 53.7 |
| Embodiment 16 | 55 | 30.2 | 34.8 |
| Embodiment 17 | 50 | 45.1 | 48.2 |
| Embodiment 18 | 52 | 43.4 | 43.8 |

Known from the table 1, in the comparative examples 1-3, a scheme adopted in the comparative example 3 comprises technological means commonly used in the field of plasma. Properties of the polypropylene film treated in the comparative example 3 arc improved to some extent compared with those treated in the comparative examples 1 and 2. However, the effect is still inferior to those of the embodiments. In the embodiments 1-3 using gaseous polar molecules as graft raw materials, the surface energy of the embodiment 1 and the surface energy of the embodiment 3 are higher. Meanwhile, in the embodiment 3, the reaction temperature is lower, the reaction time is longer, and a contact angle obtained is smaller. However, the stability of the contact angle of the embodiment 3 is weaker compared with that of the embodiment 1, and the film prepared in the embodiment 2 under the condition of a higher reaction temperature has lower surface energy and a bigger contact angle.

Therefore, the embodiments 6-18 are subjected to grouped comparison.

For the embodiment 6 and the embodiment 7, low-density polyethylene is used as a raw material, different radio-frequency powers are separately selected on the premise that the other conditions are the same. The power selected in the embodiment 6 is 400W, and the power selected in the embodiment 7 is 600W. Known from analysis on the results, the film treated in the embodiment 7 with higher power has better surface properties, however, the contact angle in the embodiment 7 rises too fast after 11 days.

For the embodiment 8 and the embodiment 9, high-density polyethylene is used as a raw material, different reaction temperatures are separately selected on the premise that the other conditions are the same. The temperature selected in the embodiment 8 is 20° C, and the temperature selected in the embodiment 9 is 0° C. Known from analysis on the results, the surface energy of the film treated in the embodiment 9 with lower temperature is greatly improved, however, the contact angle in the embodiment 9 rises too fast after 11 days, and the stability is inferior to that in the embodiment 8.

For the embodiment 10 and the embodiment 11, high-density polyethylene is used as a raw material, different reaction temperatures are separately selected on the premise that the other conditions arc the same. The temperature selected in the embodiment 10 is 70° C, and the temperature selected in the embodiment 11 is 20° C Known from analysis on the results, the surface energy of the film treated in the embodiment 10 with higher temperature is lower, however, the contact angle in the embodiment 10 rises too fast after 11 days, and the stability is weaker.

For the embodiments 12-15, polypropylene is used as a raw material. Reaction power selected in the embodiment 12 is different from those selected in the embodiments 13-15, while different reaction pressures are selected in the embodiments 13-15 on the premise that the other conditions arc the same. Reaction pressure is the same in the embodiment 12 and the embodiment 13. Known from analysis on results of the above embodiments, surface energies of the embodiments 13-15 are lowered along with increase of pressure, and the surface energy in the embodiment 12 is minimum due to lower power.

For the embodiments 16-18, polypropylene is used as a raw material, and different reaction times are selected on the premise that the other conditions are the same. Known from analysis on results of the embodiments, surface energies of the embodiments 16-18 are improved along with time prolongation. The surface energy in the embodiment 16 is greatly improved, but the contact angle in the embodiment 16 rises faster after 11 days.

In summary, in the present disclosure, conditions for a plasma gas-phase graft reaction of polyolefin films are extensively analyzed. The result reviews that surface energies of polyolefin films can be improved by lower reaction temperature, lower reaction pressure, longer reaction time and higher power. The stability of contact angles can be improved through selecting technological conditions, and the coating processing of the polyolefin films is better facilitated.

### Test Example 2 Elemental analysis on graft layer

Surface graft layers of untreated polypropylene films, polypropylene films prepared according to the method in the comparative example 1 and polypropylene films prepared according to the methods in the embodiments 1 and 2 are characterized by using an X-ray photoelectron spectroscopy (XPS, monochromatized A1 target, Al Kahv=1486.6eV), and results are as shown in a table 2.

**Table 2 XPS elemental analysis on surface graft layers of polypropylene films**

| | Carbon element | Oxygen element | Nitrogen element |
|---|---|---|---|
| Untreated PP film | 96.83wt% | 3.17wt% | 0 |
| Comparative example 1 | 87.59wt% | 11.08wt% | 1.33wt% |
| Embodiment 1 | 77.58wt% | 12.48wt% | 9.94wt% |
| Embodiment 2 | 73.16wt% | 25.12wt% | 1.72wt% |

Known from the table 2, through performing X-ray photoelectron spectroscopy (XPS) characterization on surfaces of different polypropylene films, the content of polar elements, i.e., nitrogen element and oxygen element in graft layers of films prepared in the embodiments 1 and 2 and the comparative example 1 is several folds that in surfaces of untreated polypropylene films. It illustrates that a plasma gas-phase graft reaction plays a great role in improving the polarity of the surfaces of the polypropylene films. Through further analysis, a graft reaction is carried out by using ammonia gas in the embodiment 1, while a graft reaction is carried out by using vaporized acrylic acid in the embodiment 2. Proven by results, the total content of oxygen element and nitrogen element in surfaces of films in the embodiments 1 and 2 is far higher than that in the comparative example 1 in which a graft reaction is carried out by using oxygen gas and argon gas. Thus, it may be known that compared with the prior art that oxygen gas and argon gas are commonly used, by a plasma graft reaction carried out by using polar substances, i.e., ammonia gas and acrylic acid, the surface polarity of polypropylene films can be extremely improved. In addition, nitrogen element in the comparative example 1 and nitrogen element in the embodiment 2 come from nitrogen element remaining in air.

### Test Example 3 Analysis on surface properties of polyolefin films

Surfaces of untreated polypropylene films, polypropylene films prepared according to methods in the comparative examples 1 and 3 and polypropylene films prepared according to methods in the embodiments 1 and 2 are coated with polyurethane coatings, and adhesion and solvent rub resistance are measured. Wherein the adhesion is tested according to GB/T 9286-1998 <Paints and varnishes-Cross cut test for films>, and the solvent rub resistance is tested according to GB/T 23989-2009 <Determination for the solvent resistance of coatings by solvent rubs>. Results arc as shown in a table 3.

Adhesion testing flows are shown as follows:
Placing a test panel on a rigid and flat object plane to prevent any deformation of the test panel during the test.

Performing the manual cutting by following the specified procedures.
(1) Before the test, inspecting the cutting edge of the cutting tool and maintaining the cutting tool in a good condition by sharpening the cutting edge or replacing the blade.
(2) Holding the cutting tool with the blade being perpendicular to a surface of the test panel, applying a uniform pressure on the cutting tool. And adopting the appropriate spacing guiding device, making specified cuts in the coating at a uniform cutting rate. Each cut shall penetrate to a surface of the substrate.

If it is not possible, due to the hardness of the costing, to penetrate to the substrate, the test shall be declared invalid and so reported.
(3) Repeating the above-mentioned operations, making parallel cuts of an identical quantity, crossing the original cuts at 90 degrees to them, so that a grid pattern is formed.
(4) Lightly sweeping each diagonal line of the grid pattern backwards for several times and forwards for several times with a soft hair brush.
(5) Applying an adhesive tape, pulling out a section of the adhesive tape at a uniform speed, removing the headmost section, and then, shearing an adhesive tape with the length of about 75mm.
   A center point of the adhesive tape is placed on the grid, and the direction of the adhesive tape is parallel to a group of cuts. Then, the part, on the grid, of the adhesive tape is flatted with fingers, and the length of the adhesive tape at least exceeds the grid by 20mm.
   In order to ensure that the adhesive tape and the coating are in good contact, the adhesive tape is forcibly rubbed with finger tips. The condition that a coating color seen through the adhesive tape is in comprehensive contact is of effective display.
   Within 5min after applying the tape, removing the tape by grasping the free end and pulling it off steadily in 0.5s to 1.0s at an angle which is as close as possible to 60 degree.
(6) Fixing the tape to a transparent film for reservation and for reference.

Tests on the panel are carried out at least three different positions. If three results are inconsistent and the difference exceeds one unit level, the tests are repeated at more than three different positions. Another panel is used if necessary, and all test results are reported.

Solvent rub resistance testing flows are shown as follows:
Instrument parameters: rubbing stroke 12±0.5cm; contact surface diameter: 14±0.5mm; test panel load: 1000±10g; rubbing frequency: 60±5 times/minute.
(1) Performing testing at a room temperature of 18-27° C. Wetting an appropriate amount of absorbent cotton with an ethanol solvent, then, squeezing the absorbent cotton until no solvent drips. Wrapping a contact surface of a rubbing head of a solvent-resistant rubbing instrument with the absorbent cotton. Then, placing an appropriate amount of absorbent cotton into an internal cavity and solvent guiding holes of the rubbing head, dripping a proper volume of solvent into the absorbent cotton, and fixing the rubbing head to a sliding arm.
(2) Fixing a test panel to a test bench, and adjusting front and back positions to enable the rubbing head to be fall into the middle of the test panel.
(3) After rubbing of specified times is carried out (one reciprocation motion per time) or an area of middle 8cm of the length of the test panel is exposed, stopping testing. During testing, the absorbent cotton should be kept wet without solvent dripping, otherwise, testing is performed once again.

**Table 3 Measurement on adhesion and solvent rub resistance of surfaces of polypropylene films**

| | Adhesion | Solvent rub resistance (ethanol) |
|---|---|---|
| Untreated PP film | level 0 | level 0 |
| Comparative example 1 | level 2 | level 1 |
| Comparative example 3 | level 2 | level 2 |
| Embodiment 1 | level 4 | level 4 |
| Embodiment 2 | level 4 | level 4 |

Known from the table 3, through performing adhesion and solvent rub resistance testing on surfaces of different polypropylene films, the above properties of surfaces of films prepared in the embodiments 1 and 2 and the comparative examples 1 and 3 are superior to those of surfaces of untreated polypropylene films. It illustrates that a plasma gas-phase graft reaction plays a great role in improving the properties of the surfaces of the polypropylene films. Proven by further analysis, the property level of films in the embodiments 1 and 2 performing a graft reaction by using polar molecules is far higher than that in the comparative example 1 performing a graft reaction by using oxygen and argon and meanwhile higher than that in the comparative example 3 by using oxygen and argon as working gas and then using ammonia gas for performing grafting. Thus, it may be known that compared with commonly used technological means in the prior art, by a plasma graft reaction carried out by using polar substances, i.e., ammonia gas and acrylic acid, the surface properties of polypropylene films can be extremely improved.

Polyolefin films prepared in the other embodiments of the present disclosure are subjected to the above-mentioned test, and obtained results are similar.

The present disclosure is described in detail above, the description aims to make those skilled in the art be able to understand and implement contents of the present disclosure, but not to limit the scope of protection of the present disclosure, and all equivalent variations or modifications made within the spirit essence of the present disclosure shall fall within the scope of protection of the present disclosure.

## Claims

1. A method for modifying a polyolefin film, comprising following steps:
(1) cleaning a surface of the polyolefin film to be treated with acetone, and drying the polyolefin film in the air for later use;
(2) placing the polyolefin film in step (1) into a low-temperature plasma reaction chamber, and vacuuming the low-temperature plasma reaction chamber to 10-30Pa;
(3) after step (2) ends up, introducing polar molecules into the reaction chamber, adjusting temperature and pressure, and performing a gas-phase graft reaction on the surface of the polyolefin by a radio-frequency low-temperature plasma treatment at a power supply of 100-600W and a temperature of 0-75° C to obtain a modified polyolefin film, wherein,
the polar molecules in step (3) are one or more than one selected from a group consisting of chlorine gas, hydrogen sulfide, ammonia gas, hydrogen chloride, acrylic acid, 3-aminopropyltriethoxysilane, 3-aminopropyltrimethoxysilane, 3-aminopropyldiethoxysilane, cyclohexylaminopropyltrimethoxysilane, 3-ureidopropyltrimethoxysilane, 3-mercaptopropyltriethoxysilane, 3-mercaptopropyltripropoxysilane, 3-chloropropyltrimethoxysilane, 3-chloropropyltriethoxysilane, 3-chloropropylmethyldimethoxysilane, 3-chloropropylmethyldiethoxysilane.

2. The method according to claim 1, wherein, the polyolefin film comprises low-density polyethylene, high-density polyethylene, linear low-density polyethylene, or polypropylene.

3. The method according to any one of claims 1-2, wherein, the power supply is 200-600W, and preferably 300-400W.

4. The method according to any one of claims 1-3, wherein, the gas-phase graft reaction in step (3) is carried out for 2-10min at a temperature of 0-75° C under a pressure of 15-50Pa, preferably, for 2-5min at a temperature of 20-50° C under a pressure of 35-50Pa.

5. The method according to any one of claims 1-4, wherein, a vacuum degree in step (2) is 15-30Pa, and preferably 15-20Pa.

6. A polyolefin film with capability of being directly coated prepared by the method according to any one of claims 1-5, comprising, a graft layer of a surface of the polyolefin film being a thinness of 5-80nm.

7. The polyolefin film with capability of being directly coated according to claim 6, wherein, polar elements contained in the graft layer of the surface of the polyolefin film comprise one or more than one selected from a group consisting of nitrogen element, oxygen element, chlorine element, silicon element and sulfur element.

8. The polyolefin film with capability of being directly coated according to claim 7, wherein, the polar elements contained in the graft layer account for 20-35wt% of total elements of the graft layer.

9. The polyolefin film with capability of being directly coated according to claim 6, wherein, the polyolefin film has a critical surface tension of 45-55dyne/cm, and a water contact angle of 30-60°.

## Patentansprüche

1. Verfahren zum Modifizieren einer Polyolefinfolie, folgende Schritte umfassend:
(1) Reinigen einer Oberfläche der Polyolefinfolie, die behandelt werden soll, mit Aceton und Trocknen der Polyolefinfolie an der Luft für eine spätere Verwendung;
(2) Einbringen der Polyolefinfolie in Schritt (1) in eine Tieftemperaturplasmareaktionskammer und Vakuumieren der Tieftemperaturplasmareaktionskammer auf 10-30 Pa;
(3) nachdem Schritt (2) beendet ist, Einführen von polaren Molekülen in die Reaktionskammer, Einstellen von Temperatur und Druck und Durchführen einer Gasphasenpfropfreaktion auf der Oberfläche des Polyolefins durch eine Hochfrequenztieftemperaturplasmabehandlung bei einer Stromversorgung von 100-600 W und einer Temperatur von 0-75 °C, um eine modifizierte Polyolefinfolie zu erhalten, wobei die polaren Moleküle in Schritt (3) eines oder mehr als eines sind, das aus einer Gruppe ausgewählt ist, die aus Chlorgas, Schwefelwasserstoff, Ammoniakgas, Chlorwasserstoff, Acrylsäure, 3-Aminopropyltriethoxysilan, 3-Aminopropyltrimethoxysilan, 3-Aminopropyldiethoxysilan, Cyclohexylaminopropyltrimethoxysilan, 3-Ureidopropyltrimethoxysilan, 3-Mercaptopropyltriethoxysilan, 3-Mercaptopropyltripropoxysilan, 3-Chlorpropyltrimethoxysilan, 3-Chlorpropyltriethoxysilan, 3-Chlorpropylmethyldimethoxysilan, 3-Chlorpropylmethyldiethoxysilan besteht.

2. Verfahren nach Anspruch 1, wobei die Polyolefinfolie Polyethylen niedriger Dichte, Polyethylen hoher Dichte, lineares Polyethylen niedriger Dichte oder Polypropylen umfasst.

3. Verfahren nach einem der Ansprüche 1-2, wobei die Stromversorgung 200-600 W und vorzugsweise 300-400 W beträgt.

4. Verfahren nach einem der Ansprüche 1-3, wobei die Gasphasenpfropfreaktion in Schritt (3) für 2-10 min bei einer Temperatur von 0-75 °C unter einem Druck von 15-50 Pa, vorzugsweise für 2-5 min bei einer Temperatur von 20-50 °C unter einem Druck von 35-50 Pa, ausgeführt wird.

5. Verfahren nach einem der Ansprüche 1-4, wobei ein Vakuumgrad in Schritt (2) 15-30 Pa und vorzugsweise 15-20 Pa beträgt.

6. Polyolefinfolie mit einer Fähigkeit, direkt beschichtet zu werden, hergestellt durch das Verfahren nach einem der Ansprüche 1-5, umfassend eine Pfropfschicht einer Oberfläche der Polyolefinfolie, die eine Dünnheit von 5-80 nm aufweist.

7. Polyolefinfolie mit der Fähigkeit, direkt beschichtet zu werden, nach Anspruch 6, wobei polare Elemente, die in der Pfropfschicht der Oberfläche der Polyolefinfolie enthalten sind, eines oder mehr als eines umfassen, das aus einer Gruppe ausgewählt ist, die aus einem Stickstoffelement, einem Sauerstoffelement, einem Chlorelement, einem Siliziumelement und einem Schwefelelement besteht.

8. Polyolefinfolie mit der Fähigkeit, direkt beschichtet zu werden, nach Anspruch 7, wobei die polaren Elemente, die in der Pfropfschicht enthalten sind, 20-35 Gew.-% der gesamten Elemente der Pfropfschicht ausmachen.

9. Polyolefinfolie mit der Fähigkeit, direkt beschichtet zu werden, nach Anspruch 6, wobei die Polyolefinfolie eine kritische Oberflächenspannung von 45-55 dyn/cm und einen Wasserkontaktwinkel von 30-60° aufweist.

## Revendications

1. Procédé de modification d'un film de polyoléfine, comprenant les étapes suivantes :
(1) le nettoyage d'une surface du film de polyoléfine à traiter avec de l'acétone et le séchage du film de polyoléfine dans l'air pour une utilisation ultérieure ;
(2) le placement du film de polyoléfine à l'étape (1) dans une chambre de réaction à plasma à basse température et l'aspiration de la chambre de réaction à plasma à basse température entre 10 et 30 Pa ;
(3) une fois l'étape (2) terminée, l'introduction des molécules polaires dans la chambre de réaction, l'ajustement de la température et de la pression, et la réalisation d'une réaction de greffage en phase gazeuse sur la surface de la polyoléfine par un traitement plasma à basse température et à radiofréquence, à une alimentation électrique comprise entre 100 et 600 W et à une température comprise entre 0 et 75 °C afin d'obtenir un film de polyoléfine modifié,
les molécules polaires de l'étape (3) étant une ou plusieurs choisies dans un groupe constitué par le chlore gazeux, le sulfure d'hydrogène, le gaz ammoniac, le chlorure d'hydrogène, l'acide acrylique, le 3-aminopropyltriéthoxysilane, le 3-aminopropyltriméthoxysilane, le 3-aminopropyldiéthoxysilane, le cyclohexylaminopropyltriméthoxysilane, le 3-uréidopropyltriméthoxysilane, le 3-mercaptopropyltriéthoxysilane, 3-mercaptopropyltripropoxysilane, le 3-chloropropyltriméthoxysilane, le 3-chloropropyltriéthoxysilane, le 3-chloropropylméthyldiméthoxysilane, le 3-chloropropylméthyldiéthoxysilane.

2. Procédé selon la revendication 1, dans lequel le film de polyoléfine comprend du polyéthylène basse densité, du polyéthylène haute densité, du polyéthylène basse densité linéaire ou du polypropylène.

3. Procédé selon l'une quelconque des revendications 1 à 2, dans lequel l'alimentation électrique est comprise entre 200 et 600 W, et de préférence entre 300 et 400 W.

4. Procédé selon l'une quelconque des revendications 1 à 3, dans lequel la réaction de greffage en phase gazeuse à l'étape (3) est effectuée pendant 2 à 10 min à une température comprise entre 0 et 75 °C sous une pression comprise entre 15 et 50 Pa, de préférence, pendant 2 à 5 min à une température comprise entre 20 et 50 °C sous une pression comprise entre 35 et 50 Pa.

5. Procédé selon l'une quelconque des revendications 1 à 4, dans lequel un degré de vide à l'étape (2) est compris entre 15 et 30 Pa et de préférence entre 15 et 20 Pa.

6. Film de polyoléfine pouvant être directement revêtu préparé par le procédé selon l'une quelconque des revendications 1 à 5, comprenant une couche de greffage d'une surface du film de polyoléfine présentant une finesse comprise entre 5 et 80 nm.

7. Film de polyoléfine pouvant être directement revêtu selon la revendication 6, dans lequel les éléments polaires contenus dans la couche de greffage de surface du film de polyoléfine comprennent un ou plusieurs choisis dans un groupe constitué par un élément azote, un élément oxygène, un élément chlore, un élément silicium et un élément soufre.

8. Film de polyoléfine pouvant être directement revêtu selon la revendication 7, dans lequel les éléments polaires contenus dans la couche de greffage représentent de 20 à 35 % en poids du total des éléments de la couche de greffage.

9. Film de polyoléfine pouvant être directement revêtu selon la revendication 6, le film de polyoléfine ayant une tension de surface critique comprise entre 45 et 55 dyne/cm et un angle de contact avec l'eau compris entre 30 et 60°.
